Europäisches Patentamt

European Patent Office

Office européen des brevets

(11) Publication number: **0 362 815**
**A2**

## EUROPEAN PATENT APPLICATION

(21) Application number: **89118399.8**

(22) Date of filing: **04.10.89**

(51) Int. Cl.5: **F16J 15/56 , F16J 15/16 , F16F 9/36**

(30) Priority: **06.10.88 DE 3833966**

(43) Date of publication of application:
**11.04.90 Bulletin 90/15**

(84) Designated Contracting States:
**DE ES FR GB IT**

(71) Applicant: **Stabilus GmbH**
**Wallersheimer Weg 100**
**D-5400 Koblenz-Neuendorf(DE)**

(72) Inventor: **Freitag, Herbert**
**Johannesstrasse 67**
**D-5400 Koblenz(DE)**

(74) Representative: **Weickmann, Heinrich,**
**Dipl.-Ing. et al**
**Patentanwälte H. Weickmann, Dr. K. Fincke**
**F.A. Weickmann, B. Huber Dr. H. Liska, Dr. J.**
**Prechtel Möhlstrasse 22 Postfach 860 820**
**D-8000 München 86(DE)**

(54) **A container-rod assembly.**

(57) A container is filled with a pressurized fluid. A rod extends through an opening of the container. The rod is guided through a guide ring adjacent the opening. A sealing ring is supported by the guide ring and is in sealing engagement with the rod. The pressure of the pressurized fluid acts onto the sealing ring. A ring of hard-elastic material is provided within an annular space which annular space is confined radially inwards by the rod, axially inwards by the sealing ring and axially outwards by the guide ring. The ring of hard-elastic material prevents extrusion of the sealing ring material through a gap defined by the guide ring and the rod.

## A CONTAINER-ROD ASSEMBLY

### BACKGROUND OF THE INVENTION

In gas springs a piston rod is guided through an opening in at least one end of the respective cylinder. Pressurized gas is contained within the cylinder. The piston rod passes through a guiding and sealing assembly adjacent one end of the cylinder. The piston rod is reciprocated with respect to the cylinder in operation. A high sealing effect is required to avoid escape of the pressurized gas. The friction of the piston rod with respect to the guiding and sealing assembly must be low in order to prevent wear of the elastomeric material of the guiding and sealing assembly. Moreover, low friction is desirable in order to have a well defined prestress onto the piston rod.

### STATEMENT OF THE PRIOR ART

In a device as described in German Offenlegungsschrift 2,822,615, high friction occurs between the rubber material of a sealing ring and the cylindrical surface of a steel piston rod, requiring high break-away forces at the beginning of a relative movement. The main cause for this is what is called gap extrusion, in which due to the internal pressure of the gas spring parts of a sealing lip are forced into the gap between the piston rod guide ring and the piston rod. This causes a shear action with respect to the rubber of the sealing ring.

### OBJECT OF THE INVENTION

It is the object of the present invention to provide a guiding and sealing assembly in which gap extrusion is avoided and the break-away forces are reduced.

### SUMMARY OF THE INVENTION

A container-rod assembly comprises a container defining a cavity therein and having at least one opening. A rod member having an axis and an external cylindrical face extends through the opening. A rod guiding and sealing assembly is provided adjacent the opening. The rod member is axially reciprocable through the guiding and sealing assembly. The rod guiding and sealing assembly comprises an annular guide member guidingly surrounding the rod member and a sealing ring member located axially adjacent the annular guide member and sealingly engaging the external cylindrical face of the rod member. The sealing ring member is axially adjacent the cavity. The annular guide member axially supports the sealing ring member on the side thereof remote from the cavity. The cavity contains a pressurized fluid pressing the sealing ring member axially towards the annular guide member. A ring member of hard-elastic material is provided within an annular space which is confined radially inwards by the external cylindrical face of the rod member and axially inwards by the sealing ring member.

According to the invention, the softly elastic material of the sealing ring is prevented from being extruded into a possible gap defined by the rod member and the annular guide member.

The annular space can be confined axially outwards by the annular guide member or by an intermediate member supported by the annular guidemember.

In radial outward direction the annular space can be confined by the sealing ring member itself or by an intermediate member, e.g. a stabilizing ring combined with the sealing ring member.

The annular space can be provided in a most simple and economic way in providing a recess in the sealing ring member, such that the annular space is confined axially inwards and radially outwards by faces defining this recess. In view of simple manufacturing, the recess may have an axially inner confining surface substantially perpendicular to the axis and a radially inner confining surface substantially parallel to the external cylindrical face of the rod member. Moreover, in view of easy manufacturing and assembling, the annular space may be confined axially outwards by a face of the annular guide member which is also substantially perpendicular to the axis.

The sealing ring member may be made of conventional elastomeric sealing materials, like acrylo-nitrile rubber or acrylo-nitrile butadiene.

The sealing ring members may be reinforced by a stabilizing ring member. This is of particular interest in cases of very soft sealing ring material. The stabilizing ring member may be of metallic material.

Preferably, the stabilizing ring member is adjacent an axially outer end face of the sealing ring member, so that the manufacturing of the stabilized sealing ring member is facilitated.

The stabilizing ring member may be bonded to the sealing ring member by adhesive or vulcanization.

In case of the presence of a stabilizing ring member, a radially inner circumferential face of the stabilizing ring member may be used for confining the annular space in radially outward direction.

Preferably, however, the stabilizing ring member may have a radially inward circumferential face covered by a cover layer integral with the material of the sealing ring member. In this case, the covering layer may be used for confining the annular space in radially outward direction.

The sealing ring member may have a substantially V-shaped profile open in inward direction when regarded in a plane of section containing the axis. With such a configuration, one leg of the V-shaped profile engages the external cylindrical face of the rod member and a second leg sealingly engages an inner surface of the container.

The hard-elastic material to be used for manufacturing the ring member should preferably be capable of creeping under pressure conditions, e.g. under the pressure resulting from the pressurized fluid within the container. In such case, the creeping behaviour of the hard-elastic ring results in a complete filling of the circumferential space and, more particularly, in a complete elimination of gaps into which the sealing ring material could flow in. A most preferred hard-elastic material is polytetrafluorethylene which has the desired creeping behaviour.

The hard-elastic material is preferably selected such that it is on the one hand softer than the material of the annular guide member and on the other hand harder than the material of the sealing ring member. The annular guide member may be made of aluminium, sintered iron or a duroplastic synthetic material.

As mentioned above, the annular space should be substantially completely filled by the ring member of hard-elastic material, such as to avoid a gap which could allow the inflow of the sealing ring material under the pressure of the pressurized fluid.

In order to make sure that the annular space is fully or substantially fully filled by the hard-elastic material, it is proposed that the ring member of hard-elastic material has a volume exceeding the volume of the annular space. More particularly, the ring member of hard-elastic material can have an axial height larger than the axial height of the annular space, such that the ring member of hard-elastic material is axially compressed through the annular guide member and the sealing ring member, even during operation.

The invention is particularly applicable to gas springs in which a piston rod member is guided through at least one end of a cylinder.

The use of polytetrafluorethylene is most preferred for manufacturing the hard-elastic ring because this material adapts itself readily to irregularities and gaps.

Particularly in case of a sealing ring member with a stabilizing ring member, the use of the hard-elastic ring is helpful to avoid shearing action on the sealing ring material which could otherwise occur at the axially and radially inner edge of the stabilizing ring. Such shearing risk is avoided with high security, if the hard-elastic ring projects axially beyond the axially inner face of the stabilizing ring. Due to the use of the hard-elastic material ring, the axial length of the contact zone between the piston rod and the sealing ring member can be reduced. So, the friction between the sealing ring member and the rod member can be further reduced.

Frequently, an oil reservoir is present within the cavity on the fluid pressure side of the sealing ring member. By the presence of the hard material ring which fully fills the annular space, a barrier is produced which avoids dragging of oil out of the oil reserve.

The presence of the hard-elastic ring reduces the negative effect of tolerances of the various components, such as piston rod member, sealing ring and guide member. These components can, therefore, be manufactured with larger tolerances in a more economic way.

The various features of the invention are discussed especially in the accompanying claims which form a part of the disclosure. For the better understanding of the invention, its working advantages and specific effects reference is now made to the accompanying drawings and the description, in which preferred forms of embodiment of the invention are discussed.

## BRIEF DESCRIPTION OF THE DRAWINGS

The invention will be explained in greater detail below by reference to the forms of embodiment as represented in the drawings wherein:

Fig. 1 shows in diagrammatic sectional representation a part of a gas spring and particularly a guiding and sealing assembly of the gas spring with a piston rod member passing therethrough;

Fig. 2 shows in detail a sealing ring member and a hard-elastic ring member of the piston rod guiding and sealing assembly of Fig. 1;

Fig. 3 shows a modification with respect to Fig. 2 and

Fig. 4 shows a further modification with respect to Fig. 2.

## DEATILED DESCRIPTION OF THE PREFERRED

## EMBODIMENTS

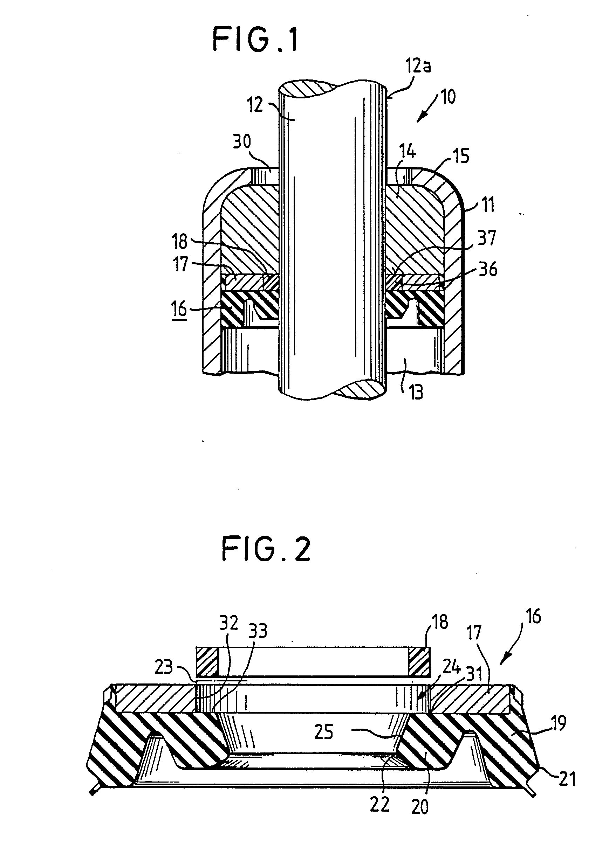

The gas spring 10 as represented in Fig. 1 consists essentially of a container tube 11 in which a piston rod 12 is inwardly and outwardly movable. On the piston rod 12 there is secured a damper piston (not shown) which is displaceable within a compressed-gas chamber 13. The piston rod 12 is guided by an annular guide member 14, which is held in its position with a crimped-over part 15 of the container tube 11. The opening of the container tube is designated by 30. Inwards in the axial direction, i.e. towards the compressed-gas chamber 13, a sealing ring 16 is brought to abut onto the annular guide member 14.

On the low-pressure side, remote from the compressed-gas chamber 13, a stabilizing washer 17, preferably a steel washer, is vulcanized into the sealing ring 16. Radially inwards in relation to the stabilizing washer 17 a ring 18 of hard-elastic synthetic plastic material, preferably of polytetrafluorethylene, is arranged which rests on the piston rod 12.

The sealing ring 16 as represented in enlarged manner in Fig. 2 consists of a radially outer sealing lip 19 and a radially inner sealing lip 20. The radially outer sealing lip 19 possesses an outer sealing edge 21 which is sealingly in operative contact with the inner surface of a component, preferably of the container tube 11. The radially inner sealing lip 20 is provided with an inner sealing edge 22, along which the piston rod 12 slides. On the low-pressure side of the sealing ring 16, radially inwards of the stabilizing washer 17, a recess 24 is provided into which the polytetrafluorethylene ring 18 is inserted. This ring 18 reduces the axial length of the confact surface 25 between the inner sealing lip 20 and the piston rod 12. Due to this reduction of the rubber area 25, the friction is reduced and the requisite break-away forces become less.

The axial extent of the ring 18 and thus its total volume are somewhat greater than the axial extent of the recess 24. Thus, an axial protrusion 23 of the ring 18 occurs, as indicated in Fig. 2. In the installed situation, the ring 18 is axially compressed due to this protrusion 23 and completely fills the existing space of the recess 24. The excess volume in this case also presses against the inner sealing lip 20 and may creep into existing gaps between the piston rod 12 and the annular guide member 14, so that these gaps are also completely filled.

A shearing effect at the edge 31 is effectively avoided.

The recess 24 is confined by a cylindrical face 32 and a plane face 33. In the assembled condition as shown in Fig. 1 the ring 18 is accommodated within an annular space 36 which is confined by the faces 32,33 of the sealing ring 19 and by a face 37 of the annular guide member 14 and additionally by the external cylindrical face 12a of the piston rod 12.

This annular space is completely filled by the ring 18.

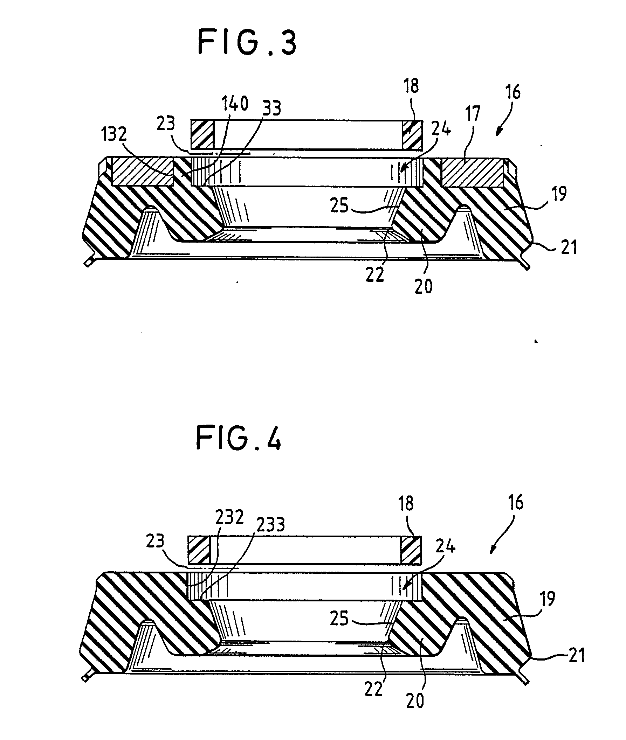

In the embodiment of Fig. 3, the stabilizing washer 17 is covered on its radially inner circumferential face 132 with a covering layer 140 which is integral with the sealing ring material of the sealing ring 16.

In the embodiment of Fig. 4, the stabilizing washer has been omitted and the recess 24 is radially outwards confined by a surface 232 of the sealing ring material.

Specific forms of embodiment of the invention have been represented and described in order to illustrate the use of the principles of the invention. Of course, the invention can also be realized in other ways without departing from these principles.

The reference numbers in the claims serve only for facilitation of understanding and are not to be understood as a limitation.

## Claims

1. A container-rod assembly comprising a container (11) defining a cavity (13) therein and having at least one opening (30), a rod member (12) having an axis and an external cylindrical face (12a) and extending through said at least one opening (30), a rod guiding and sealing assembly (14,16) adjacent said at least one opening (30), said rod member (12) being axially reciprocable through said rod guiding and sealing assembly (14,16), said rod guiding and sealing assembly (14,16) comprising an annular guide member (14) guidingly surrounding said rod member (12) and a sealing ring member (16) located axially adjacent said annular guide member (14) and sealingly engaging said external cylindrical face (12a) of said rod member (12), said sealing ring member (16) being axially adjacent said cavity (13), said annular guide member (14) axially supporting said sealing ring member (16) on the side thereof remote from said cavity (13), said cavity (13) containing a pressurized fluid pressing said sealing ring member (16) axially towards said annular guide member (14), a ring member (18) of hard-elastic material being provided within an annular space (36) confined radially inwards by said external cylindrical face (12a) of said rod member (12) and axially inwards by said sealing ring member (16).

2. A container-rod assembly as set forth in claim 1, said annular space (36) being confined axially outwards by said annular guide member (14).

3. A container-rod assembly as set forth in claim 1 or 2, said annular space (36) being confined radially outwards by said sealing ring member (16).

4. A container-rod assembly as set forth in one of claims 1 - 3, said annular space (36) being confined axially inwards and radially outwards by a recess (24) of said sealing ring member (16).

5. A container-rod assembly as set forth in claim 4, said recess (24) having an axially inner confining surface (33) substantially perpendicular to said axis and a radially outer confining surface (32) substantially parallel to said external cylindrical face (12a) of said rod member (12).

6. A container-rod assembly as set forth in one of claims 1 - 5, said annular space (36) being confined axially outwards by a face of said annular guide member (14), said face (37) being substantially perpendicular to said axis.

7. A container-rod assembly as set forth in one of claims 1 - 6, said sealing ring member (16) being made of elastomeric material.

8. A container-rod assembly as set forth in claim 7, said sealing ring member (16) being made of acrylo-nitrile rubber or acrylo-nitrile butadiene.

9. A container-rod assembly as set forth in one of claims 1 - 8, said sealing ring member (16) being reinforced by a stabilizing ring member (17).

10. A container-rod assembly as set forth in claim 9, said stabilizing ring member (17) being metallic.

11. A container-rod assembly as set forth in claim 9 or 10, said stabilizing ring member (17) being adjacent an axially outer end face of said sealing ring member (16).

12. A container-rod assembly as set forth in one of claims 9 - 11, said stabilizing ring member (14) being bonded to said sealing ring member (16) by adhesive or vulcanization.

13. A container-rod assembly as set forth in one of claims 9 - 12, said stabilizing ring member (17) having a radially inner circumferential face (32), said radially inner circumferential face (32) confining said annular space (36) in radially outward direction.

14. A container-rod assembly as set forth in one of claims 9 - 12, said stabilizing ring member (17) having a radially inward circumferential face (132) covered by a covering layer (140) integral with said sealing ring member (16), said covering layer (140) confining said annular space (36) in radially outward direction.

15. A container-rod assembly as set forth in one of claims 1 - 14, said sealing ring member (16) having a substantially V-shaped profile open in inward direction when regarded in a plane of section containing said axis, one leg (20) of said V-shaped profile engaging said external cylindrical face (12a) of said rod member (12) and a second leg (19) of said V-shaped profile sealingly engaging an inner surface of said container (11).

16. A container-rod assembly as set forth in one of claims 1 - 15, said ring member (18) of hard-elastic material being made of a material capable of creeping under pressure conditions.

17. A container-rod assembly as set forth in claim 16, said ring member (18) of hard-elastic material being made of polytetrafluorethylene.

18. A container-rod assembly as set forth in one of claims 1 - 17, said ring member (18) of hard-elastic material being made of a material softer than the material of said annular guide member (14) and harder than the material of said sealing ring member (16).

19. A container-rod assembly as set forth in one of claims 1 - 18, said annular space (36) being substantially completely filled by said ring member (18) of hard-elastic material.

20. A container-rod assembly as set forth in one of claims 1 - 19, said ring member (18) of hard-elastic material having a volume exceeding the volume of said annular space (36).

21. A container-rod assembly as set forth in one of claims 1 - 20, said ring member (18) of hard-elastic material having an axial height larger than the axial height of said annular space (36), said ring member (18) of hard-elastic material being axially compressed between said annular guide member (14) and said sealing ring member (16).

22. A container-rod assembly as set forth in one of claims 1 - 21, said container (11) being the cylinder of a gas spring (10) and said rod member (12) being the piston rod member of a gas spring.

# FIG.1

# FIG.2

# FIG.3

# FIG.4